# EUROPEAN PATENT SPECIFICATION

(11) **EP 2 820 358 B1**
(45) Date of publication and mention of the grant of the patent: **12.04.2017**
(21) Application number: 13754035.7
(22) Date of filing: 20.02.2013
(51) Int. Cl.: F24H 1/20, F24D 17/00, A47J 31/54, A47J 31/58, A47J 27/21, B67D 1/00

(54) **A WATER HEATER AND A METHOD OF OPERATING SAME**
WASSERERHITZER UND BETRIEBSVERFAHREN DAFÜR
CHAUFFE-EAU ET PROCÉDÉ DE FONCTIONNEMENT CORRESPONDANT

(30) Priority: 27.02.2012 AU 2012900750
(43) Date of publication of application: 07.01.2015
(73) Proprietor: Zip Industries (Aust) Pty Ltd, Condell Park NSW 2200 (AU)
(72) Inventor: CHERTKOW, Brian, St Ives Chase NSW 2075 (AU); FOUKS, Boris, Waverly NSW 2024 (AU); MOULT, Kevin, South Maroota NSW 2756 (AU)
(74) Representative: Zwicker, Jörk
(86) International application number: PCT/AU2013/000153
(87) International publication number: WO 2013/126945

(56) References cited:
- WO-A1-2005/088205
- WO-A1-2005/088205
- WO-A1-2008/124865
- WO-A1-2008/124865
- US-A- 5 019 690
- US-A- 5 545 877
- US-B2- 7 798 107

## Description

### FIELD OF THE INVENTION

The present invention relates to a water heater and a method of operating same. More particularly, the invention relates to a method of determining an operating water temperature for a boiling water heater and to a boiling water heater adapted to determine an operating water temperature.

The invention has been primarily developed in relation to a boiling water heater and will be described hereinafter with reference to this application. However, it will be appreciated that the invention is not limited to this particular field of use and is also, for example, suitable for use in a combined water heater and water chiller unit.

### BACKGROUND OF THE INVENTION

Water boils at different temperatures based on atmospheric conditions. The higher the altitude, the lower the air pressure, and the resultant lower temperatures at which water boils. In order to achieve maximum performance and maximum customer satisfaction, water heaters should operate at a temperature very close to water's boiling point for a given altitude.

One known, relatively simple, approach to compensate for changing boiling temperatures was to ensure that the water in the boiling water tank was kept at a temperature well below the lowest temperature at which water is expected to boil. However, a disadvantage of this approach is it often resulted in water being dispensed at around 90°C to 94°C, which was disappointing to many users.

A second known, relatively simple, approach was to provide a few discrete temperature settings. For example, a sea level installation could be set to operate with a water temperature of 98°C, with the facility to have 95°C and 92° C settings for higher altitudes. However, disadvantage of this approach is that these adjustments were needed to be carried out by a skilled service technician.

A more sophisticated known approach involves an automatic electronic calibration occurring at the time of installation. The calibration process ensures that the actual boiling water temperature at the altitude of the installation site is determined. An example of this approach is disclosed in the Applicant's International (PCT) Patent Application No. PCT/AU2005/000286 (WO 2005/088205), which discloses boiling water for a controlled period of time and measuring the maximum temperature reached, being the boiling water calibrated temperature, and subtracting a predetermined amount in order to determine an operating temperature. This approach relies on the principle that boiling water does not increase in temperature, even as additional energy is continually applied, until all of the water is boiled away. This approach is superior to those earlier approaches described above but does have some disadvantages. Firstly, the calibration process is usually only done on installation and, as a result, changes in barometric pressure can affect the exact boiling water temperature. That said, these variations are generally regarded as being relatively minor. However, a more important disadvantage is due to the fact that the water temperature is generally measured with an electronic measuring device, such as a thermistor. Some thermistors, over time, have a tendency to drift in their readings. For example, a water heater calibrated at 100°C with a nominal operating temperature set 1.0°C below should operate at 99°C. However, is the thermistor were to drift by 1.5°C such that it reads 97.5°C when it was actually measuring 99°C, the water heater's controller would continue to apply power to attempt to restore the water temperature back to what it is processing as 99°C. However, the water heater will then actually try to achieve a water temperature of 100.5°C. As this cannot be achieved, the water heater will over boil until such time as any safety devices switch it off. Alternatively, if the 1.5°C drift was in the other direction, the water heater will maintain a temperature of only 97.5°C, which can result in customer dissatisfaction.

It is the object of the present invention to substantially overcome, or at least ameliorate, one or more of the above disadvantages.

### SUMMARY OF THE INVENTION

Accordingly, in a first aspect, the present invention provides a method of determining an operating water temperature for a boiling water heater, the method including the following steps:
(a) adding water to a tank to a predetermined level;
(b) energising a heating means within the tank to heat the water in the tank to an initial predetermined temperature;
(c) de-energising the heating means when the initial predetermined temperature is reached and measuring an initial overshoot temperature differential above the initial predetermined temperature;
(d) calculating a further predetermined temperature being the sum of the initial predetermined temperature and a predetermined amount of the initial overshoot temperature differential;
(e) waiting until the temperature of the water in the tank has reduced by a predetermined drop from the initial predetermined temperature;
(f) energising the heating means within the tank to heat the water in the tank to the further predetermined temperature as calculated in (d) above;
(g) de-energising the heating means when the further predetermined temperature is reached and measuring a further overshoot temperature differential above the further predetermined temperature;
(h) re-calculating the further predetermined temperature being the sum of the current further predetermined temperature and a predetermined amount of the current further overshoot temperature differential;
(i) waiting until the temperature of the water in the tank has reduced by a predetermined drop from the further predetermined temperature of step (h);
(j) continuing steps (f) to (i) until the further overshoot temperature substantially equals the further predetermined temperature, thereby becoming a boiling calibration temperature; and
(k) substracting an offset temperature from the boiling calibration temperature of step (h) to thereby determine the operating water temperature.

The initial predetermined temperature is preferably about 90°C.

The predetermined amount is preferably 20% to 40% of the initial overshoot temperature differential or of the further overshoot temperature differential.

The predetermined drop is preferably about 1 or 2°C degrees.

The offset temperature is preferably about 1 or 2°C.

The method preferably includes continuing steps (d) to (j) until the boiling calibration temperature stabilises, which can typically take up to about 4 hours.

The method preferably includes performing steps (d) to (j) at regular intervals after step (k) as a re-confirming calibration. The regular intervals are preferably daily, weekly or monthly.

The heating means is preferably an electrical heating element.

In a second aspect, the present invention provides a boiling water heater adapted to determine an operating water temperature, the boiling water heater including:
a water tank;
temperature measurement means to measure the temperature of the water in the tank;
heating means adapted to heat the water in the tank;
a controller adapted to receive the temperature of the water in the tank from temperature measurement means and to control the heating means in accordance with steps (b) to (k) of the first aspect.

The heating means is preferably an electrical heating element.

The temperature measurement means is preferably a thermistor, or similar electronic temperature measuring device.

### BRIEF DESCRIPTION OF THE DRAWINGS

A preferred embodiment of the invention will now be described, by way of an example only, with reference to the accompanying drawings in which:
Fig. 1 is a schematic view of an embodiment of a water heater;
Fig. 2 is a graph of water temperature and heater state versus time during initial calibration of the water heater shown in Fig. 1;
Fig. 3 is a graph of water temperature versus time during a four hour installation calibration of the water heater shown in Fig. 1;
Fig. 4 is a graph of water temperature versus time through a four hour installation calibration including water draw-off interruptions of the water heater shown in Fig. 1; and
Fig. 5 is a graph of water temperature versus time over a five hour period with periodic calibration temperature tracking of the water heater shown in Fig. 1.

### DETAILED DESCRIPTION OF THE PREFERRED EMBODIMENT

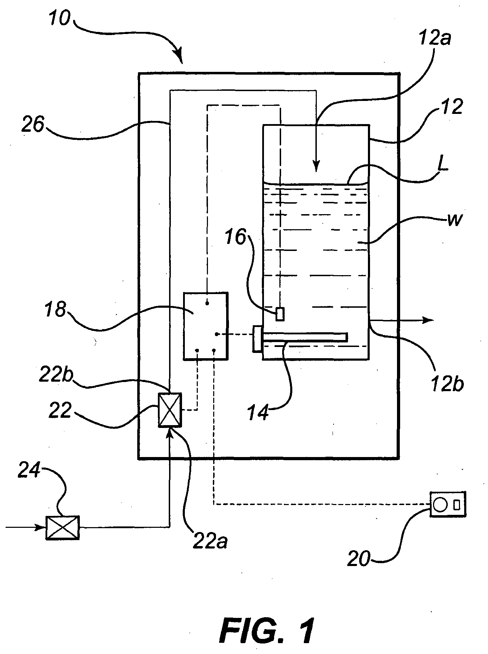

Figure 1 shows an embodiment of an instant boiling water heater 10. The water heater 10 includes a water tank 12 filled with water W to a predetermined level L. The tank 12 includes a mains or relatively cooler water inlet 12a and a boiling or heated water outlet 12b, the latter being connected to a tap or other user actuated flow control valve (not shown). An electric heating element 14 is disposed within the tank 12 towards the bottom of the tank 12. A temperature sensor, in the form of a thermistor 16, is also disposed in the tank 12.

The heating element 14 and the thermistor 16 are connected to a controller 18, such as a Programmable Logic Controller (PLC) or the like. The controller 18 receives power from a power outlet 20. A water inlet control valve 22 is also connected to the controller 18. An inlet 22a of the control valve 22 receives mains water via a stopcock 24. An outlet 22b of the control valve 22 supplies water to an inlet 12a of the tank 12 via a supply line 26.

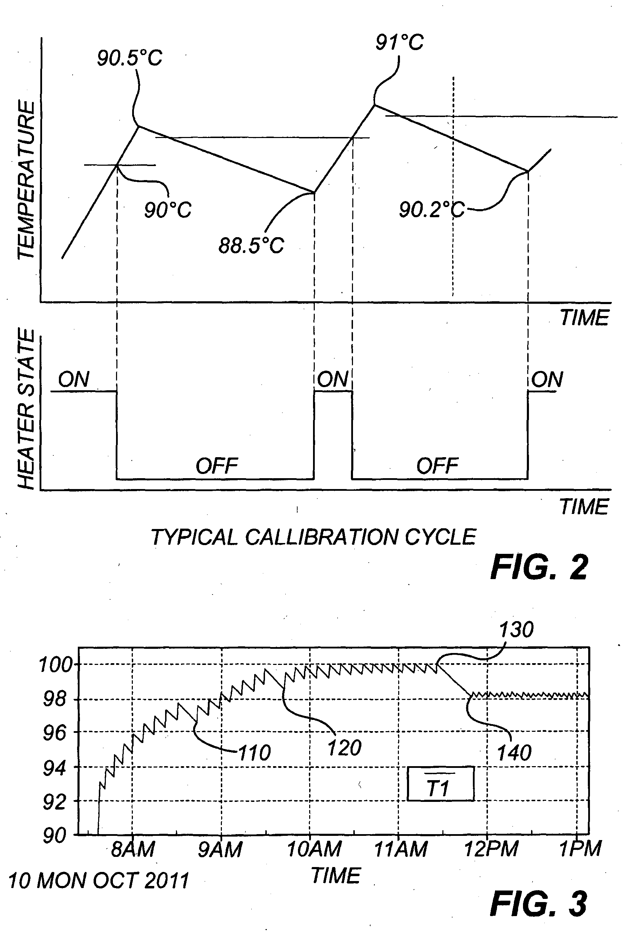

A method of determining an operating water temperature for the water heater 10 will now be described on the basis of Figure 2.

The controller 18 undertakes the following method steps:
(a) opening the valve 22 to add water W to the tank 12 to the predetermined level L;
(b) energising the heating means 14 to heat the water W in the tank 12 to an initial predetermined temperature of 90°C;
(c) de-energising the heating means 14 when the initial predetermined temperature of 90°C is reached and measuring an initial overshoot temperature differential of, for example, 90.5°C above the initial predetermined temperature of 90°C;
(d) calculating a further predetermined temperature of about 90.2°C, being the sum of the initial predetermined temperature (90°C) and 40% of the initial overshoot temperature differential (0.5°C x 0.4 = 0.2°C);
(e) waiting until the temperature of the water W in the tank 12 has reduced by a predetermined drop, say 1°C to 2°C, from the initial predetermined temperature of 90°C;
(f) energising the heating means 14 to heat the water W in the tank 12 to the further predetermined temperature of 90.2°C;
(g) de-energising the heating means 14 when the further predetermined temperature of 90.2°C is reached and measuring a further overshoot temperature differential of, for example, 91 °C above the further predetermined temperature of 90.2°C;
(h) re-calculating a further predetermined temperature of 90.5°C, being the sum of the existing further predetermined temperature (90.2°C) and 40% of the further overshoot temperature differential (0.8°C x 0.4 = 0.3°C);
(i) waiting until the temperature of the water W in the tank 12 has reduced by a predetermined drop, say 1°C to 2°C, from the further predetermined temperature (90.5°C) of step (h);
(j) continuing steps (f) to (i) until the further overshoot temperature substantially equals the further predetermined temperature at 100°C (at sea level for standard atmospheric conditions), this temperature (100°C) is now the boiling calibration temperature;
(k) substracting an offset temperature of 2°C from the boiling calibration temperature (100°C) of step (j) to thereby determine the operating water temperature of (98°C) for the current location of the water heater 10 and the current surrounding atmospheric conditions.

As shown in Fig. 3, the above calibration process is typically undertaken for two hours. Sudden barometric pressure changes can influence the outcome of the calibration during this two hour period. To reduce the effects that such external changes can have on the final calibration result and final operating water temperature, two separate overriding adjustments downwards are introduced in this period, being Points 110 and Points 120 in Fig. 3.

The initial calibration period, at installation or when the water heater 10 is powered up, is set for a full four hour period. This allows the final maximum set point temperature to be established well within this period. At the end of the four hour period, the overshoot temperature will have stabilised without any further increment, and the final maximum set point temperature 130 will be registered in the controller 18 as the calibrated boiling water operating temperature of the water heater 10 at the installation site. When the calibration process has finished, the controller 18 reverts to normal operation.

A user may also determine the offset temperature they would like the water heater 10 to utilise. For example, this may be 1°C or 2°C below the calibrated boiling operating temperature. The offset temperature, of 98°C, shown as 140 in Fig. 3, becomes the new temperature at which the water W in the tank 12 is maintained.

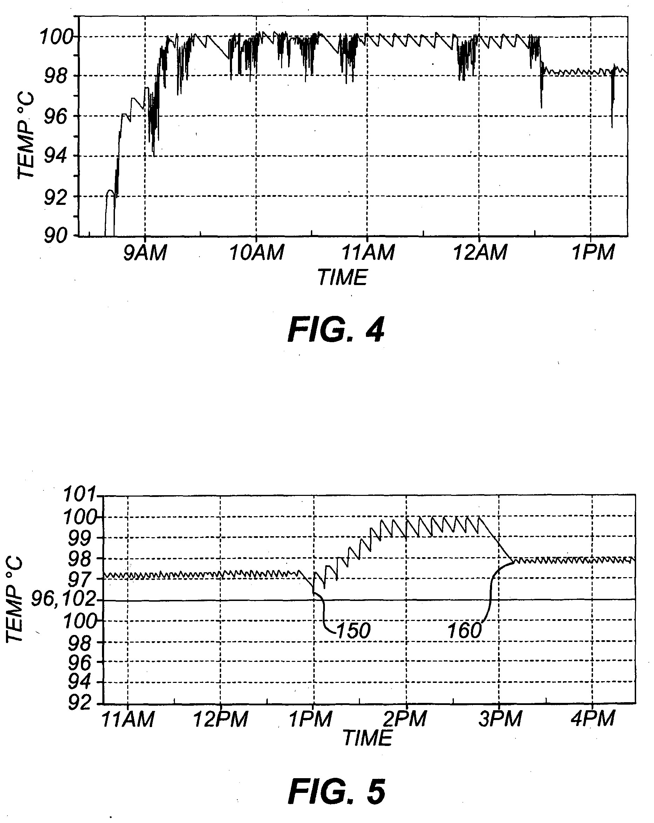

Fig. 3 shows the calibration temperature trace versus time, without any external interference. However, it is possible that the dispensing of water W from the water heater 10 occurs during the four hour calibration period. The logic within the controller 18 is able to accommodate such occurrences. Fig. 4 shows a typical calibration trace with more than 10 water draw-off events during the four hour calibration period, with the water heater 10 successfully completing the calibration cycle regardless. The calibrated boiling water temperature of the water heater 10 can also be reconfirmed at selected intervals through a maintenance calibration of less than two hours. The intervals between the maintenance calibrations may be very frequent or less frequent - such as daily or weekly, depending on the location and fluctuations in barometric pressures expected.

Fig. 5 shows a typical maintenance calibration where the calibration initiates at the operating temperature 150 and finishes two hours later at the adjusted operating temperature 160. The maintenance calibration cycle will occur without inconvenience to the user, who can dispense boiling water as per usual without affecting the result.

A significant advantage of the water heater 10 and the method of operation described above, is that small incremental adjustments or drifts within the structure of the thermistor 16, caused by natural ageing of internal structural materials, will automatically be compensated for during the next calibration and the desired temperature within the tank 12 will be maintained.

Other advantages of the water heater 10 and above described method include:
the initiation and completion of the calibration is virtually invisible to the user;
the calibration is at regular intervals which allows the water heater a reconfirmation of its current status and automatic adjustment to suit;
no steam is expelled from the water heater during the calibration making it safe to occur at any time at regular intervals;
no advanced technical training or personnel are required to undertake such a calibration; and
the accuracy of the resulting operating boiling point setting is improved against previous calibration methods.

Although the invention has been described with reference to a preferred embodiment, it will be appreciated by those persons skilled in the art that the invention may be embodied in many other forms within the scope of protection as defined in the claims.

## Claims

1. A method of determining an operating water temperature for a boiling water heater, the method including the following steps:
(a) adding water to a tank to a predetermined level;
(b) energising a heating means within the tank to heat the water in the tank to an initial predetermined temperature;
(c) de-energising the heating means when the initial predetermined temperature is reached and measuring an initial overshoot temperature differential above the initial predetermined temperature;
(d) calculating a further predetermined temperature being the sum of the initial predetermined temperature and a predetermined amount of the initial overshoot temperature differential;
(e) waiting until the temperature of the water in the tank has reduced by a predetermined drop from the initial predetermined temperature;
(f) energising the heating means within the tank to heat the water in the tank to the further predetermined temperature as calculated in (d) above;
(g) de-energising the heating means when the further predetermined temperature is reached and measuring a further overshoot temperature differential above the further predetermined temperature;
(h) re-calculating the further predetermined temperature being the sum of the current further predetermined temperature and a predetermined amount of the current further overshoot temperature differential;
(i) waiting until the temperature of the water in the tank has reduced by a predetermined drop from the further predetermined temperature of step (h);
(j) continuing steps (f) to (i) until the further overshoot temperature substantially equals the further predetermined temperature, thereby becoming a boiling calibration temperature; and
(k) substracting an offset temperature from the boiling calibration temperature of step (h) to thereby determine the operating water temperature.

2. The method as claimed in claim 1, wherein the initial predetermined temperature is about 90°C.

3. The method as claimed in claim 1 or 2, wherein the predetermined amount is 20% to 40% of the initial overshoot temperature differential or of the further overshoot temperature differential.

4. The method as claimed in claim 1, 2 or 3,wherein the predetermined drop is about 1 or 2°C degrees.

5. The method as claimed in any one of claims 1 to 4, wherein the offset temperature is about 1 or 2°C.

6. The method as claimed in any one of claims 1 to 5, wherein the method includes continuing steps (d) to (j) until the boiling calibration temperature stabilises.

7. The method as claimed in any one of claims 1 to 6, wherein the method includes performing steps (d) to (j) at regular intervals after step (k) as a re-confirming calibration.

8. The method as claimed in claim 7, wherein the regular intervals are daily, weekly or monthly.

9. The method as claimed in any one of claims 1 to 8, wherein the heating means is an electrical heating element.

10. A boiling water heater adapted to determine an operating water temperature, the boiling water heater including:
a water tank;
temperature measurement means to measure the temperature of the water in the tank;
heating means adapted to heat the water in the tank;
a controller adapted to receive the temperature of the water in the tank from temperature measurement means and to control the heating means in accordance with steps (b) to (k) of any of claims 1 to 9.

11. The heater as claimed in claim 10, wherein the heating means is an electrical heating element.

12. The heater as claimed in claim 10 or 11, wherein the temperature measurement means is a thermistor, or similar electronic temperature measuring device.

## Patentansprüche

1. Ein Verfahren zur Bestimmung einer Betriebswassertemperatur für ein kochendes Wasserheizgerät, beinhaltend die folgenden Schritte:
(a) Hinzufügen von Wasser zu einem Behälter bis zu einem vorgegebenen Niveau;
(b) Aktivieren eines Heizmittels innerhalb des Behälters, um das Wasser in dem Behälter bis zu einer ursprünglichen vorgegebenen Temperatur zu erhitzen;
(c) Deaktivieren des Heizmittels, wenn die ursprüngliche vorgegebene Temperatur erreicht ist, und Messen einer ursprünglichen Übersteigerungstemperaturdifferenz oberhalb der ursprünglichen vorgegebenen Temperatur;
(d) Berechnen einer weiteren vorgegebenen Temperatur, die die Summe aus der ursprünglichen vorgegebenen Temperatur und einem vorgegebenen Anteil der ursprünglichen Übersteigerungstemperaturdifferenz ist;
(e) Warten bis sich die Temperatur des Wassers in dem Behälter von der ursprünglichen vorgegebenen Temperatur um einen vorgegebenen Abfall verringert hat;
(f) Aktivieren des Heizmittels in dem Behälter, um das Wasser in dem Behälter bis zu der weiteren vorgegebenen Temperatur wie in (d) oben berechnet zu erhitzen;
(g) Deaktiveren des Heizmittels, wenn die weitere vorgegebene Temperatur erreicht ist, und Messen einer weiteren Übersteigerungstemperaturdifferenz oberhalb der weiteren vorgegebenen Temperatur;
(h) Wiederberechnen der weiteren vorgegebenen Temperatur, die die Summe aus der derzeitigen weiteren vorgegebenen Temperatur und einem vorgegebenen Anteil der derzeitigen weiteren Übersteigerungstemperaturdifferenz ist;
(i) Warten bis sich die Temperatur des Wassers in dem Behälter von der weiteren vorgegebenen Temperatur aus Schritt (h) um einen vorgegebenen Abfall verringert hat;
(j) Fortsetzen der Schritte (f) bis (i) bis die weitere Übersteigerungstemperatur im wesentlichen gleich der weiteren vorgegebenen Temperatur ist, wobei die weitere vorgegebene Temperatur damit eine Kochkalibrierungstemperatur wird;
(k) Abziehen einer Versatztemperatur von der Kochkalibrierungstemperatur aus Schritt (h), um damit die Betriebswassertemperatur zu bestimmen.

2. Das Verfahren nach Anspruch 1, wobei die ursprüngliche vorgegebene Temperatur um die 90°C beträgt.

3. Das Verfahren wie in Anspruch 1 oder 2 beansprucht, wobei der vorgegebene Anteil 20% bis 40% der ursprünglichen Übersteigerungstemperaturdifferenz oder der weiteren Übersteigerungstemperaturdifferenz beträgt.

4. Das Verfahren wie in Anspruch 1, 2 oder 3 beansprucht, wobei der vorgegebene Abfall ungefähr 1 oder 2°C Grad beträgt.

5. Das Verfahren wie in einem der Ansprüche 1 bis 4 beansprucht, wobei die Versatztemperatur ungefähr 1 oder 2°C Grad beträgt.

6. Das Verfahren wie in einem der Ansprüche 1 bis 5 beansprucht, wobei das Verfahren das Fortsetzen der Schritte (d) bis (j) beinhaltet, bis sich die Kochkalibrierungstemperatur stabilisiert.

7. Das Verfahren wie in einem der Ansprüche 1 bis 6 beansprucht, wobei das Verfahren das Durchführen der Schritte (d) bis (j) nach dem Schritt (k) in regelmäßigen Intervallen als wiederbestätigende Kalibrierung beinhaltet.

8. Das Verfahren wie in Anspruch 7 beansprucht, wobei die regelmäßigen Intervalle täglich, wöchentlich oder monatlich sind.

9. Das Verfahren wie in einem der Ansprüche 1 bis 8 beansprucht, wobei das Heizmittel ein elektrisches Heizmittel ist.

10. Ein kochendes Wasserheizgerät, das geeignet ist, eine Betriebswassertemperatur zu bestimmen, das kochende Wasserheizgerät umfassend:
einen Wasserbehälter;
Temperaturmessungsmittel, um die Temperatur des Wassers in dem Behälter zu messen;
Heizmittel eingerichtet um das Wasser in dem Behälter zu heizen;
ein Steuergerät eingerichtet um die Temperatur des Wassers in dem Behälter von dem Temperaturmessungsmittel zu empfangen und das Heizmittel entsprechend den Schritten (b) bis (k) eines der Ansprüche 1 bis 9 zu steuern.

11. Das Heizgerät wie in Anspruch 10 beansprucht, wobei das Heizmittel ein elektrisches Heizmittel ist.

12. Das Heizgerät wie in Anspruch 10 oder 11 beansprucht, wobei das Temperaturmessungsmittel ein Thermistor oder ein ähnliches elektronisches Temperaturmessgerät ist.

## Revendications

1. Procédé pour la détermination d'une température de l'eau de fonctionnement pour un chauffe-eau à eau bouillante, le procédé comprenant les étapes suivantes:
(a) addition d'eau dans un réservoir jusqu'à un niveau prédéterminé;
(b) activation d'un moyen de chauffage dans le réservoir pour chauffer l'eau dans le réservoir à une température prédéterminée initiale;
(c) désactivation du moyen de chauffage lorsque la température prédéterminée initiale est atteinte et mesure d'un différentiel de température de dépassement initial au-dessus de la température prédéterminée initiale;
(d) calcul d'une autre température prédéterminée qui est la somme de la température prédéterminée initiale et d'une quantité prédéterminée du différentiel de température de dépassement initial;
(e) attente jusqu'à ce que la température de l'eau dans le réservoir se soit réduite par un abaissement prédéterminé à partir de la température prédéterminée initiale;
(f) activation du moyen de chauffage dans le réservoir pour chauffer l'eau dans le réservoir à l'autre température prédéterminée telle que calculée dans (d) ci-dessus;
(g) désactivation du moyen de chauffage lorsque l'autre température prédéterminée est atteinte et mesure d'un autre différentiel de température de dépassement au-dessus de l'autre température prédéterminée;
(h) re-calcul de l'autre température prédéterminée qui est la somme de l'autre température prédéterminée actuelle et d'une quantité prédéterminée de l'autre différentiel actuel de température de dépassement;
(i) attente jusqu'à ce que la température de l'eau dans le réservoir se soit réduite par un abaissement prédéterminé à partir de l'autre température prédéterminée de l'étape (h);
(j) poursuite des étapes (f) à (i) jusqu'à ce que l'autre température de dépassement soit substantiellement égale à l'autre température prédéterminée, devenant ainsi une température d'étalonnage de l'ébullition; et
k) soustraction d'une température de compensation de la température d'étalonnage de l'ébullition de l'étape (h) pour déterminer ainsi la température de l'eau de fonctionnement.

2. Procédé selon la revendication 1, dans lequel la température prédéterminée initiale est d'environ 90°C.

3. Procédé selon la revendication 1 ou 2, dans lequel la quantité prédéterminée est de 20% à 40% du différentiel de température de dépassement initial ou de l'autre différentiel de température de dépassement.

4. Procédé selon la revendication 1, 2 ou 3, dans lequel l'abaissement prédéterminé est d'environ 1 ou 2 degrés °C.

5. Procédé selon l'une quelconque des revendications 1 à 4, dans lequel la température de compensation est d'environ 1 ou 2°C.

6. Procédé selon l'une quelconque des revendications 1 à 5, dans lequel le procédé comprend la poursuite des étapes (d) à (j) jusqu'à ce que la température d'étalonnage d'ébullition se stabilise.

7. Procédé selon l'une quelconque des revendications 1 à 6, dans lequel le procédé comprend la mise en oeuvre des étapes (d) à (j) à des intervalles réguliers après l'étape (k) à titre d'étalonnage de re-confirmation.

8. Procédé selon la revendication 7, dans lequel les intervalles réguliers sont journaliers, hebdomadaires ou mensuels.

9. Procédé selon l'une quelconque des revendications 1 à 8, dans lequel le moyen de chauffage est un élément chauffant électrique.

10. Chauffe-eau à eau bouillante adapté pour déterminer une température de l'eau de fonctionnement, le chauffe-eau à eau bouillante comprenant:
un réservoir d'eau;
un moyen de mesure de la température pour mesurer la température de l'eau dans le réservoir;
un moyen de chauffage adapté pour chauffer l'eau dans le réservoir;
un régulateur adapté pour recueillir la température de l'eau dans le réservoir à partir du moyen de mesure de la température et pour
réguler le moyen de chauffage conformément aux étapes (b) à (k) selon l'une quelconque des revendications 1 à 9.

11. Appareil de chauffage selon la revendication 10, dans lequel le moyen de chauffage est un élément chauffant électrique.

12. Appareil de chauffage selon la revendication 10 ou 11, dans lequel le moyen de mesure de la température est une thermistance, ou un dispositif électronique similaire de mesure de température.
